# EUROPEAN PATENT APPLICATION

(11) **EP 4 837 927 A1**
(43) Date of publication of application: **11.11.2026**
(21) Application number: 25305672.5
(22) Date of filing: 09.05.2025
(51) Int. Cl.: C08F 2/48, C08F 2/50, C08F 220/18, B32B 7/12, C09J 123/00, C08F 2/06, C08F 4/04

(54) **COMPOUNDS COMPRISING MULTIFUNCTIONAL PHOTOINITIATORS SUITABLE FOR CURABLE ACRYLATE PRESSURE SENSITIVE ADHESIVES**

(71) Applicant: ARKEMA France, 92800 Puteaux (FR); Université de Haute Alsace, 68200 Mulhouse (FR); Centre National de la Recherche Scientifique, 75016 Paris (FR)
(72) Inventor: LI, Qing, 68057 Mulhouse (FR); LALEVEE, Jacques, 68057 Mulhouse (FR); COMER, Christopher, Dublin, 43017 (US); CHARRIERE, Bruno, 92800 Puteaux (FR)
(74) Representative: Bandpay & Greuter

(57) **Abstract**

UV curable compounds comprising a group which is a multifunctional photoinitiator are disclosed herein as well as compositions such as pressure sensitive adhesive compositions including such UV curable compounds as well as applications of such pressure sensitive adhesives, such as laminates, as well as methods of making all of the aforementioned compounds, compositions and articles. Preferably the multifunctional photoinitiator is selected from the group of a multifunctional benzophenone compound, a multifunctional anthraquinone compound, a multifunctional hybrid benzophenone-anthraquinone compound and any combination thereof, wherein 2 of the benzophenone units of the multifunctional benzophenone compound have the same aryl moiety, 2 of the anthraquinone units of the multifunctional anthraquinone compound have the same aryl moiety or a benzophenone unit and an anthraquinone unit of the hybrid benzophenone-anthraquinone compound share an aryl moiety. The photoinitiator may be grafted onto polymers or oligomers, preferably acrylate polymer/ oligomers and/or may be a repeat unit of a polymer or oligomer, preferably an acrylate polymer or oligomer.

## Description

### FIELD OF THE INVENTION

The field of the invention includes UV curable compounds including photoinitiators, specifically multifunctional photoinitiators, compositions such as pressure sensitive adhesive compositions including such UV curable compounds as well as applications of such pressure sensitive adhesives ("PSA"), such as laminates, as well as methods of making all of the aforementioned compounds, compositions and articles.

### TECHNICAL BACKGROUND

Ultraviolet ("UV") light curable acrylic hotmelt adhesives (UV-HMPSA) typically utilize 1 of 3 methods (or combinations) to covalently crosslink adhesives and build the cohesive and adhesive properties typical of a pressure sensitive adhesive. The methods to establish crosslinking in UV-HMPSA include the following:
1) Benzophenone attached to the polymer.
   For example, US 5,389,699 relates to an UV-crosslinkable material based on a (meth)acrylate copolymer of copolymerized monomers that are benzophenone derivatives.
2) Double bonds attached to polymer with addition of a type I or type II photoinitiator to crosslink the adhesive.
   For example, US 8,735,506 B2 relates to a process for making UV curable pressure sensitive adhesive (PSA) compositions by derivatizing an acrylic polymer with a derivatizing agent prepared from a hydroxy-functional acrylate monomer and a diisocyanate.
   or
3) Epoxide groups attached to the polymer that are crosslinked via a photogenerated super acid catalyst .
   For example, US 8,796,350 B2 describes a UV curable pressure sensitive adhesive comprising an acrylic polymer and a cationic photoinitiator, wherein said acrylic polymer is prepared from the group consisting of an acrylic monomer consisting of an acrylic or methacrylic acid derivative and a monomer, wherein said monomer comprising a pendant reactive functional group selected from cycloaliphatic epoxide, oxetane or mixtures thereof.

Each of these methods relies on functional groups present in the polymer at the time of synthesis to enable crosslinking to occur. In method 1) above, limited options exist for increasing crosslink density of the polymer once the initial polymer composition/synthesis has been completed. The limitation on crosslinking is due to the finite amount of benzophenone attached to the polymer chain. When the adhesive is irradiated with light, the crosslinking that can occur is set by the amount of benzophenone present and UV light dose. Addition of multifunctional acrylates has limited utility to increase the crosslink density while potentially plasticizing the adhesive at the same time. Additionally, benzophenone reacts most efficiently with light below 300 nm which limits through cure, cure of thicker adhesives, and cure with longer wavelengths of UV light. There is no way to manipulate the cure response to light at longer wavelengths (>320 nm) with regards to method 1) that exists today. UV absorbing additives such as plasticizers, tackifiers, pigments, also present challenges to this type of technology.

In method 2), crosslink density and cure with longer wavelength light can be manipulated more easily. First, the addition of multifunctional oligomers or monomers like trimetholypropane triacrylate can be added to adhesives to increase crosslink density. Second, because the photoinitiator is added to the formulation, photoinitiators can be selected to maximize cure with short and long wavelength UV light (within the UVC range (280nm and less)). Therefore, cure of thick adhesives or adhesives with UV light absorbing additives (i.e., tackifiers) can be improved by proper selection of the photoinitiator. However, thermal instabilities due to the pendant double bond on the polymer exist limiting the utility of the method 2) to low application temperature (preferably less than 130°C, more preferably less than about 120°C, in some instances no more than about 100°C) hot melts UV curable acrylic pressure sensitive adhesives. Due to the instability, limitations of molecular weight and monomer formulation need to be considered when designing products because these two variables have substantial impact on melt viscosity and processing temperature.

In method 3), crosslink density and cure with longer wavelength light can be influenced by the choice of the photoacid generator and epoxy oligomers added to the adhesive. Unfortunately, method 3) polymers can only be designed if stability in the presence of expoxides or oxtanes is afforded. Therefore, the monomer tool box has limitations that limit production of UV-HMPSA's using standard monomers and present challenges when used in equipment shared with other typical UV-HMPSAs (i.e., adhesives that include acrylic acid).

### BRIEF DESCRIPTION

One embodiment disclosed herein is a UV curable compound comprising a photoinitiator group, wherein the photoinitiator group comprises at least one selected from a multifunctional benzophenone compound, a multifunctional anthraquinone compound, a multifunctional hybrid benzophenone-anthraquinone compound and any combination thereof, wherein 2 of the benzophenone units of the multifunctional benzophenone compound have the same aryl moiety, 2 of the anthraquinone units of the multifunctional anthraquinone compound have the same aryl moiety or a benzophenone unit and an anthraquinone unit of the hybrid benzophenone-anthraquinone compound share an aryl moiety.

The UV curable compounds may comprise copolymers including repeat units derived from the multifunctional photoinitiator and/or polymers or oligomers having the multifunctional photoinitiator grafted to the backbone of the polymer or oligomer.

The amount of the photoinitiator group in the UV curable compound may comprise at least about 0.05 wt% up to about 10 wt% of the UV curable compound or a wt% of the photoinitiator group in the UV curable compound may comprise one selected from the group consisting of about 0.05 wt % to about 0.1 wt%, about 0.1 wt % to about 0.3 wt%, about 0.3 wt % to about 0.5 wt%, about 0.5 wt % to about 1.0 wt %, about 1 wt % to about 2 wt %, about 2 wt % to about 3 wt %, about 3 wt % to about 4 wt %, about 4 wt % to about 5 wt %, about 5 wt % to about 6 wt %, about 6 wt % to about 7 wt %, about 7 wt % to about 8 wt %, about 8 wt % to about 9 wt %, about 9 wt % to about 10 wt % and combinations thereof.

Another embodiment disclosed is a UV curable composition, preferably a PSA composition, comprising at least one of the UV curable compounds. The UV curable composition may also include a (alk(en)yl) (meth)acrylate monomer and a (meth) acrylic acid. An application of the UV curable PSA compositions is as a component of a laminate.

Also included herein are methods making the aforementioned laminates and UV curable PSA compositions.

Advantages of the embodiments disclosed herein may include any one of the following: (1) the ability to manipulate the crosslink density of acrylate polymer; (2) the ability increase the crosslink density of the acrylate polymer; (3) improving/ increasing the cure through the thickness of the polymer; (4) UV absorbing additives such as but not limited to pigments, plasticizers, or tackifiers can be present in formulations; (5) the wavelengths of light outside of the UVC range (100-280 nm) may be used to cure the acrylate polymer, e.g., wavelengths in either the UVB range (above 280 to about 315 nm) and/or the UVA range (above 315 to about 400 nm) (red shifted (absorb light of longer wavelengths)); (6) the dosage of UV light may be reduced for particular embodiments; (7) the ability to manipulate/ increase the crystallinity of the acrylate polymer; (8) the ability to manipulate/ reduce elongation of the acrylate polymer; (9) the ability to reduce swelling by solvents of the acrylate polymer; (10) the ability to reduce the dosage of energy to cure acrylate polymer; (11) manipulate/ increase the modulus of the acrylate polymer; (12) the ability to manipulate/ increase the glass transition temperature of the acrylate polymer; (13) the ability to manipulate/ increase the softening points of the acrylate polymer; and (14) any combination thereof.

### DETAILED DESCRIPTION

Before explaining at least one embodiment of the present disclosure in detail, it is to be understood that the present disclosure is not limited in its application to the details of construction and the arrangement of the components or steps or methodologies set forth in the following description or illustrated in the drawings. The present disclosure is capable of other embodiments or of being practiced or carried out in various ways. Also, it is to be understood that the phraseology and terminology employed herein is for the purpose of description and should not be regarded as limiting.

Unless otherwise defined herein, technical terms used in connection with the present disclosure shall have the meanings that are commonly understood by those of ordinary skill in the art. Further, unless otherwise required by context, singular terms shall include pluralities and plural terms shall include the singular.

All patents, published patent applications, and non-patent publications mentioned in the specification are indicative of the level of skill of those skilled in the art to which the present disclosure pertains. All patents, published patent applications, and non-patent publications referenced in any portion of this application are herein expressly incorporated by reference in their entirety to the same extent as if each individual patent or publication was specifically and individually indicated to be incorporated by reference.

All of the articles and/or methods disclosed herein can be made and executed without undue experimentation in light of the present disclosure. While the articles and methods of the present disclosure have been described in terms of preferred embodiments, it will be apparent to those of ordinary skill in the art that variations may be applied to the articles and/or methods and in the steps or in the sequence of steps of the method(s) described herein without departing from the concept, spirit and scope of the present disclosure. All such similar substitutes and modifications apparent to those skilled in the art are deemed to be within the spirit, scope and concept of the present disclosure.

As utilized in accordance with the present disclosure, the following terms, unless otherwise indicated, shall be understood to have the following meanings.

The use of the word "a" or "an" when used in conjunction with the term "comprising" may mean "one," but it is also consistent with the meaning of "one or more," "at least one," and "one or more than one." The use of the term "or" is used to mean "and/or" unless explicitly indicated to refer to alternatives only if the alternatives are mutually exclusive, although the disclosure supports a definition that refers to only alternatives and "and/or." Throughout this application, the term "about" is used to indicate that a value includes the inherent variation of error for the quantifying device, the method(s) being employed to determine the value, or the variation that exists among the study subjects. For example, but not by way of limitation, when the term "about" is utilized, the designated value may vary by plus or minus twelve percent, or eleven percent, or ten percent, or nine percent, or eight percent, or seven percent, or six percent, or five percent, or four percent, or three percent, or two percent, or one percent. The use of the term "at least one" will be understood to include one as well as any quantity more than one, including but not limited to, 1, 2, 3, 4, 5, 10, 15, 20, 30, 40, 50, 100, etc. The term "at least one" may extend up to 100 or 1000 or more depending on the term to which it is attached. In addition, the quantities of 100/1000 are not to be considered limiting as lower or higher limits may also produce satisfactory results. In addition, the use of the term "at least one of X, Y, and Z" will be understood to include X alone, Y alone, and Z alone, as well as any combination of X, Y, and Z. The use of ordinal number terminology (i.e., "first", "second", "third", "fourth", etc.) is solely for the purpose of differentiating between two or more items and, unless otherwise stated, is not meant to imply any sequence or order or importance to one item over another or any order of addition.

As used herein, the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. The terms "or combinations thereof" and "and/or combinations thereof" as used herein refer to all permutations and combinations of the listed items preceding the term. For example, "A, B, C, or combinations thereof" is intended to include at least one of: A, B, C, AB, AC, BC, or ABC and, if order is important in a particular context, also BA, CA, CB, CBA, BCA, ACB, BAC, or CAB. Continuing with this example, expressly included are combinations that contain repeats of one or more items or terms, such as BB, AAA, AAB, BBC, AAABCCCC, CBBAAA, CABABB, and so forth. The skilled artisan will understand that typically there is no limit on the number of items or terms in any combination, unless otherwise apparent from the context.

For purposes of the following detailed description, other than in any operating examples, or where otherwise indicated, numbers that express, for example, quantities of ingredients used in the specification and claims are to be understood as being modified in all instances by the term "about". The numerical parameters set forth in the specification and attached claims are approximations that may vary depending upon the desired properties to be obtained in carrying out the invention.

The term "monomer" refers to a small molecule that chemically bonds during polymerization to one or more monomers of the same or different kind to form a polymer.

The term "polymer" refers to a large molecule prepared from one or more types of monomer residues (repeating units) connected by covalent chemical bonds. By this definition, polymer encompasses compounds wherein the number of monomer units may range from very few, which more commonly may be called as oligomers, to very many. Preferably the polymer has more than about 8 repeat units and the oligomer include more than 1 repeat unit and up to about 8 repeat units.

The term "copolymer" herein refers to a polymer prepared from more than one monomers.

### Experimental Conditions

### 1. Crosslinking Density

The evolution of the dynamic moduli of PSA samples upon photopolymerization was followed on a Haake-Mars Rotational Rheometer (ThermoFisher, Asnières sur Seine, France) at a constant frequency of 10 Hz and at 120°C. A plate-plate geometry with a gap of 300 micrometers was used. A mercury UV lamp (I₀=286 mW/cm²) was selected in this experiment. The modulus measured within the rubbery plateau region can be used to quantitatively calculate the crosslinking density. According to the theory of rubber elasticity, the modulus at low strain rate is given by: $G ′ = \frac{ρRT}{{M}_{C}} = \frac{ρRT}{\frac{ρ}{n}} = n RT$

Where ρ is the density of the material, τ the temperature, and R the perfect gas constant. n is the number of network chain segments bounded on both ends by crosslinks (mol/m³), while M_{c} is the number average molecular weight between crosslinks (g/mol).

### 2. Peel Adhesion Test

Peel adhesion measurement was performed on a Zwick / Roell Z010 testing machine at room temperature. A strip of tested material (carrier tape coated with PSA) with dimensions of 25 x 75 mm was bonded firmly with additional pressing force (1kg steel roller) to the clean steel plate. After 16 hours, the plate and the free end of the strip were clamped in the jaws of the testing machine to provide a 180° angle of removal at a speed of 300 mm/min according to the international standard AFERA 4001. Then, the force required to peel off the tape from the plate was measured during the measurement.

### 3. Cohesion Test

The cohesion test of the obtained adhesive tapes was tested at room temperature according to the international FINAT FTM 8 (Finat Test method) method. The 20 x 20 mm adhesive film was applied to the steel plate and after 15 minutes the other end of the strip was loaded with a weight with a mass of 1 kg. According to the standard, cohesion is the time after which the adhesive film will separate from the steel plate, under a load of 1 kg.

### 4. UV-visible absorption spectra

UV-visible absorption properties of different photoinitiators (PIs) were investigated in dichloromethane using a JASCO V730 spectrometer (JASCO, Lisses, France). Steady-state photolysis studies of the PIs were studied under UV lamp irradiation, and the concentration of the PIs in acetonitrile was 3 x 10⁻⁵ M, and the concentration of amine (EDB, ethyl 4-dimethylaminobenzoate) was 6 x 10⁻⁵ M.

### 5. Redox potentials and free energy change

The redox potentials of the PIs (E_{OX} and E_{red}) were measured in acetonitrile by cyclic voltammetry using a VoltaLab PST006 and tetrabutylammonium hexafluorophosphate as the supporting electrolyte (potentials vs. saturated calomel electrode - SCE). Furthermore, the free energy change ΔG for the interaction of the PIs with additives for the electron transfer reactions in the excited state was calculated from the equation Δ*G = E_{OX} - E_{red} - E^{T}* + C (where E_{OX}, E_{red}, and E^{T} are the oxidation potential of the electron donor, the reduction potential of the electron acceptor and the excited state energy level, respectively; C is neglected as usually done for polar solvents.) The oxidation potential of EDB is 1.0 V.

### 6. Laser Flash Photolysis Experiments

A complete laser flash photolysis system was acquired from Luzchem and employed the pulses from a Nd:YAG laser (355 nm, Continuum). For recording the transient absorption spectra and quenching studies with oxygen or EDB, solutions of PI in acetonitrile were prepared with an absorbance value of 0.2~0.3 at the excitation wavelength (355 nm) in a UV-cell with a path length of 1 cm.

The UV curable compound of the present disclosure comprises at least one acrylate group and at least one photoinitiator group.

### Preparation of the UV curable compound

The UV curable compound may be prepared by reacting a multifunctional photoinitiator (or photoinitiator compound or photoinitiator) with at least one or more acrylate monomers, and preferably with (meth)acrylic acid.

The multifunctional photoinitiator disclosed herein preferably includes at least 2 functional groups. Non-limiting examples of number of functional groups for the multifunctional photoinitiator may comprise, at least about 2, at least about 3, at least about 4 and at least about 5.

Disclosed herein is a photoinitiator comprising at least one selected from a multifunctional benzophenone compound, a multifunctional anthraquinone compound, a multifunctional hybrid benzophenone-anthraquinone compound and any combination thereof, wherein 2 of the benzophenone units of the multifunctional benzophenone compound have the same aryl moiety, 2 of the anthraquinone units of the multifunctional anthraquinone compound have the same aryl moiety or a benzophenone unit and an anthraquinone unit of the hybrid benzophenone-anthraquinone compound share an aryl moiety. Exemplary embodiments of the multifunctional photoinitiator are disclosed below in the claims.

The photoinitiator may further comprise a terminal acrylate group.

The photoinitiator group may further comprise a R' group, wherein R' comprises at least one selected from alkyl, vinyl, furyl, thiol, thioether, aryl thioether, alkyl thiolether, morpholino, chlorine, bromine, sulfur, nitrogen, nitrogen- alkyl, ester, ether, alkoxy, phenoxy, amine, amide, urethane, phenyl, (meth)acrylate, (meth)acrylamide, epoxide, oxetane, vinyl, ketone, O-C(=O)-, and any combination thereof. The photoinitiator may further comprises a R" group, wherein R" comprises at least one selected from alkyl, vinyl, furyl, thiol, thioether, aryl thioether, alkyl thiolether, morpholino, chlorine, bromine, sulfur, nitrogen, nitrogen- alkyl, ester, ether, alkoxy, phenoxy, amine, amide, urethane, phenyl, (meth)acrylate, (meth)acrylamide, epoxide, oxetane, vinyl, ketone, O-C(=O)-, and any combination thereof. R' may be same as R" or R' may be different from R".

The photoinitiator may have a structure of one of (a.) - (q.):
a. 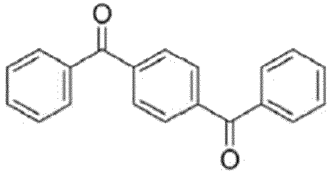 (1,4 difunctional benzophenone or 1,4-DBB)
b. 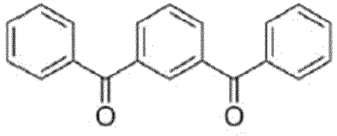 (1,3 difunctional benzophenone or 1,3-DBB)
c. 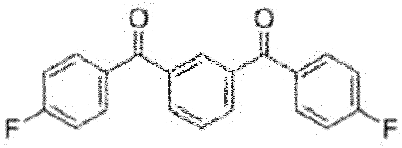 (fluorinated 1,3 difunctional benzophenone or (4-F)1,3-DBB)
d. 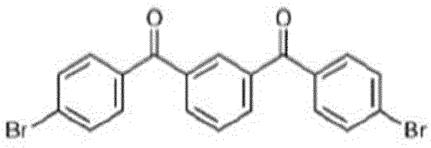 (brominated 1,3 difunctional benzophenone or (4-Br)1,3-DBB)
e. 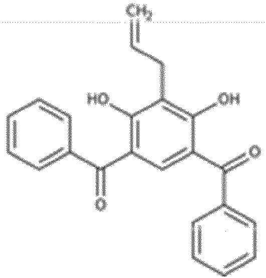 (hydroxyl 1,3 difunctional benzophenone or (2OH)1,3-DBB)
f. 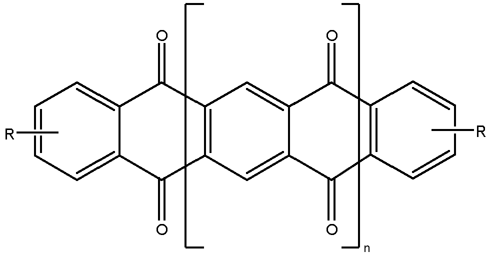
g. 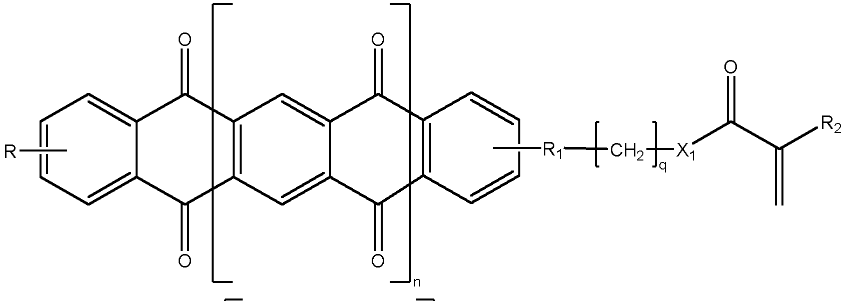
h. 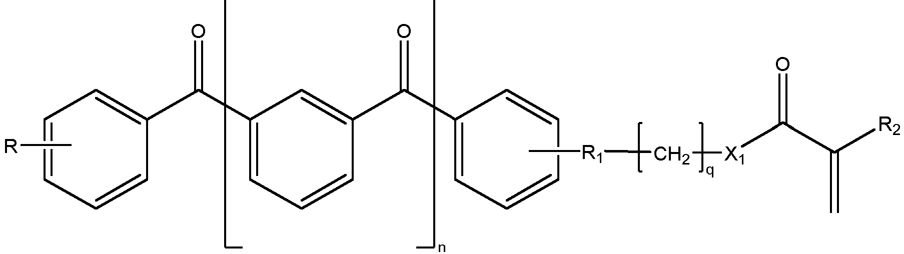
i. 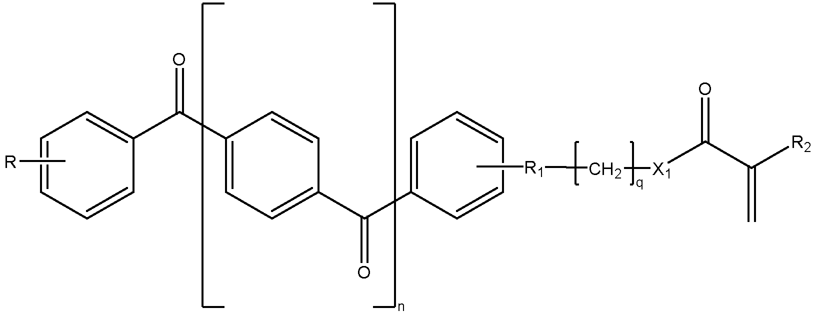
j. 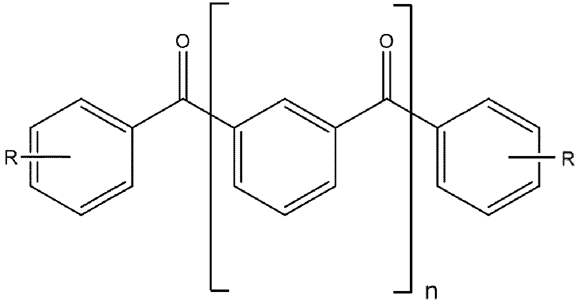
k. 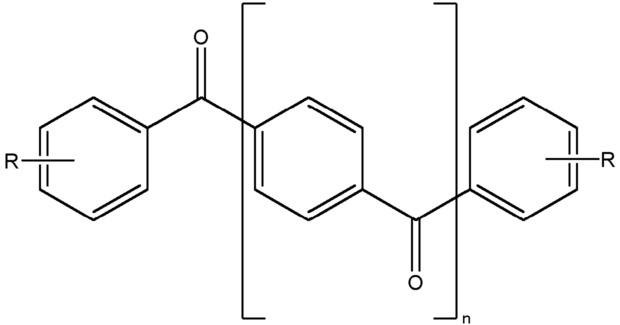
l. 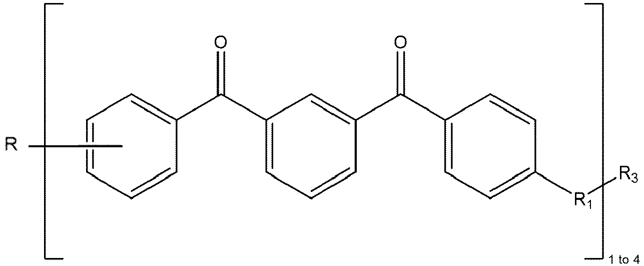
m. 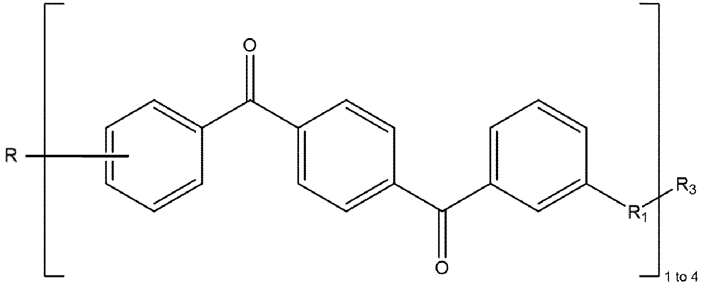
n. 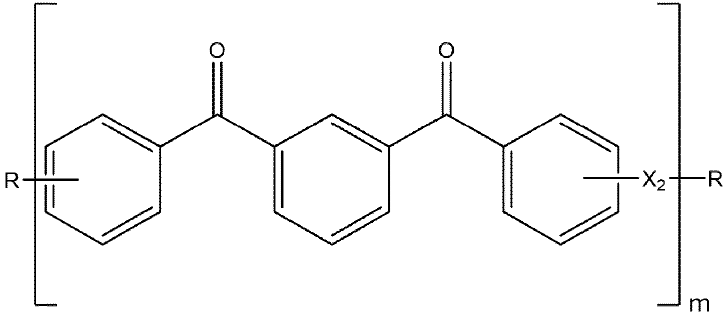
o. 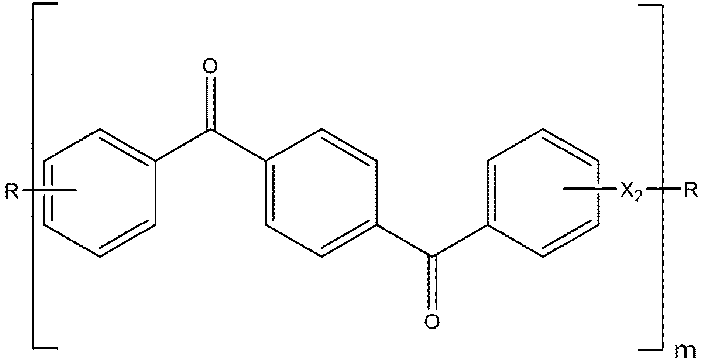
p. 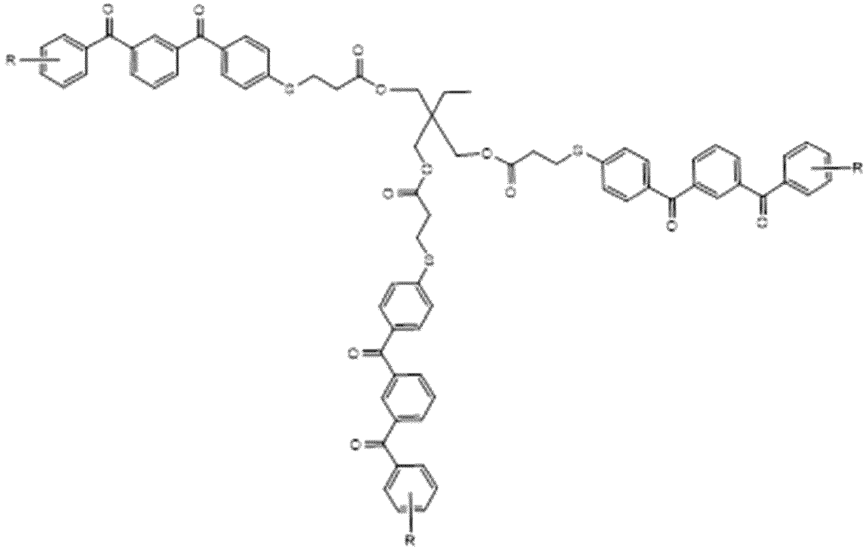 and
q. any combination thereof.

In the above formulae,
n comprises higher than 0, preferably at least 1, more preferably about 1 to 20;
m comprises at least 2, preferably about 2 to 20;
q comprises 0 or higher, preferably about 1 to 20;
R comprises, or is, at least one selected from the group of hydrogen, alkyl, preferably about a C4-C20 carbon chain, more preferably about a C6-C20 carbon chain, vinyl, furyl, thiol, thioether, aryl thioether, alkyl thiolether, morpholino, chlorine, bromine, sulfur, nitrogen, nitrogen- alkyl, ester, ether, alkoxy, phenoxy, amine, amide, urethane, phenyl, (meth)acrylate, (meth)acrylamide, epoxide, oxetane, vinyl, ketone, O-C(=O)-, and any combination thereof;
R₁ is a group selected from thioether, ester, urethane and amide;
R₂ is a methyl group (CH₃) or hydrogen (H);
R₃: comprises at least one group selected from the group of a multifunctional thiol, a multifunctional alcohol, a multifunctional amine, a multifunctional acid and any combination thereof;
X₁ is oxygen or nitrogen with attached proton, preferably the proton comprises hydrogen;
X₂ is a unit derived from the condensation reaction of at least one selected from the group of dialcohol, diacid, dithiol, diamine, and any combinations thereof, to form either an oligomer or a polymer.

Preferably, the photoinitiator comprises a photoinitiator selected from, or is selected from, the group consisting of 1,3 difunctional benzophenone (1,3-DBB), 1,4 difunctional benzophenone (1,4-DBB), fluorinated 1,3 difunctional benzophenone ((4-F)1,3-DBB), hydroxyl 1,3 difunctional benzophenone ((2OH)1,3-DBB), brominated 1, 3 difunctional benzophenone ((4-Br)1,3-DBB) and the combinations thereof, more preferably from the group consisting of 1,3 difunctional benzophenone, 1,4 difunctional benzophenone, fluorinated 1,3 difunctional benzophenone, brominated 1, 3 difunctional benzophenone and the combinations thereof.

In a first mode of preparation of the UV curable compound, the photoinitiator may be copolymerized with at least the one or more acrylate monomers and preferably with (meth)acrylic acid. In a second mode of preparation, the photoinitiator may be grafted to the backbone of a polymer, preferably an acrylate polymer (also referred to as "(meth)acrylate polymer"). The aforementioned description of the photoinitiator relative to polymers is equally applicable to oligomers.

In the first mode of preparation, the photoinitiator may comprise an olefinic bond, preferably a (meth)acrylate function. Compounds designated as g, h and i may for example be used in such a case. Copolymerization may be carried out by putting all monomers including the photoinitiator in contact, together with a chain transfer agent such as isopropyl alcohol, in a solvent such as ethyl acetate. The reaction temperature may be set to by way of example only from 50 to 120°C, for instance from 70 to 100°C.

In the second mode of preparation, the photoinitiator may comprise a grafting group, such as an epoxide group or an acid group, which may be able to react with functional groups present on a (meth)acrylate polymer. In advantageous embodiments, the (meth)acrylate polymer comprises units from glycidyl (meth)acrylate, preferably from glycidyl methacrylate, and preferably units from at least another (meth)acrylate monomer, and optionally units from (meth)acrylic acid, Preferably, the photoinitiator comprises an acid group that reacts with the epoxide groups of the polymer (contained in the units of glycidyl (meth)acrylate). A grafting reaction may be carried out by putting the photoinitiator in contact with the (meth)acrylate polymer.

### The (Meth)Acrylate Monomers (also referred to as acrylate monomers)

Monomers that may be used in the UV curable PSA compositions disclosed herein include suitable alk(en)yl (meth)acrylates. The monomers can include alkyl acrylates, preferably having 1 to about 20 carbon atoms, more particularly 2 to 20 carbon atoms, in the alkyl group, alkyl methacrylates, hydroxyalkyl acrylates, hydroxyalkyl methacrylates, glycidyl acrylate and/or glycidyl methacrylate. In one non-limiting embodiment, the alkyl acrylate can be selected from the group consisting of n-butyl acrylate, sec-butyl acrylate, tert-butyl acrylate, 2-ethylhexyl acrylate, iso-bornyl acrylate, iso-bornyl methyl acrylate, ethyl acrylate, iso-octyl acrylate and decyl acrylate, and hexyl acrylate. Non-limiting examples of useful alkyl methacrylates can include methyl methacrylate, ethyl methacrylate, 2-ethylhexyl methacrylate, n-butyl methacrylate, sec-butyl methacrylate, tert-butyl methacrylate and dodecyl methacrylate. Examples of hydroxyalkyl acrylate or hydroxyalkyl methacrylate can include, but are not limited to, hydroxyethyl acrylate, hydroxyethyl methacrylate, hydroxypropyl acrylate, hydroxypropyl methacrylate, 4-hydroxybutyl acrylate and 4-hydroxybutyl methacrylate.

### UV curable compound

The UV curable compound disclosed herein comprises at least one acrylate group and at least one photoinitiator group. The photoinitiator group comprises at least one selected from a multifunctional benzophenone group, a multifunctional anthraquinone group, a multifunctional hybrid benzophenone-anthraquinone group and any combination thereof, wherein 2 of the benzophenone units of the multifunctional benzophenone group have the same aryl moiety, 2 of the anthraquinone units of the multifunctional anthraquinone group have the same aryl moiety or a benzophenone unit and an anthraquinone unit of the hybrid benzophenone-anthraquinone group share an aryl moiety.

In the present disclosure, the term "acrylate group" may mean a group or unit derived from a (meth)acrylate monomer (for example, a unit obtained from the polymerization of a (meth)acrylate monomer).

Preferably the UV curable compound comprises, or is, a polymer or an oligomer.

The photoinitiator group may be as described above in relation to the preparation process, or may be a group/unit derived from such photoinitiators.

The photoinitiator group may be present in the UV curable compound in an amount of at least about 0.05 wt%, preferably at least about 0.1 wt%, more preferably at least about 0.2 wt%, even more preferably at least about 0.3 wt%, based on the weight of the UV curable composition. The photoinitiator group may be present in the UV curable compound in an amount of at most about 10 wt%, preferably at most about 5 wt%, %, based on the weight of the UV curable compound. Advantageously, the amount of the photoinitiator group in the UV curable compound is from about 0.1 wt% up to about 10 wt%, preferably from about 0.2 wt% up to about 10 wt%, more preferably from about 0.3 wt% up to about 10 wt%, more preferably from about 0.3 wt% up to about 8 wt%, even more preferably from about 0.3 wt% up to about 5 wt%. In embodiments, the amount of the photoinitiator in the UV curable composition may be from about 0.3 wt% to about 0.5 wt%, or from about 0.5 wt% to about 1.0 wt%, or from about 1 wt% to about 2 wt%, or from about 2 wt%to about 3 wt%, or from about 3 wt% to about 4 wt%, or from about 4 wt% to about 5wt%, or from about 5 wt% to about 6 wt%, or from about 6 wt% to about 7 wt%, or from about 7 wt% to about 8 wt%, or from about 8 wt% to about 9 wt%, or from about 9 wt% to about 10 wt%.

The acrylate group (or "(meth)acrylate group) may be as described above in relation to the monomers used in the preparation process, or may be a unit derived from such monomers.

Advantageously, the photoinitiator group is present in the UV curable compound as a pendant group of the compound and or as a repeat unit of the compound.

In one embodiment, the photoinitiator group is present in the UV curable compound as a repeat unit of the compound. Preferably, a number of the repeat units of the photoinitiator group is at least about 2 repeat units, preferably at least about 8, more preferably at least about 9 repeat units, further preferably no more than about 100 (such as from about 2 to about 100 repeat units, preferably from about 8 to about 100 repeat units, more preferably from about 8 to about 100 repeat units). Alternatively, the number of the repeat units of the photoinitiator group in the UV curable compound may be less than about 8 repeat units, preferably from about 2 to about 8 repeat units, preferably from about 2 to about 6 repeat units, or from about 2 to about 4 repeat units.

In another embodiment, the photoinitiator group is present in the UV curable compound as a pendant group of the compound. The UV curable compound may comprise at least one second photoinitiator pendant group. Preferably the second photoinitiator pendant group comprises at least one selected from a multifunctional benzophenone group, a multifunctional anthraquinone group, a multifunctional hybrid benzophenone-anthraquinone group and any combination thereof, wherein 2 of the benzophenone units of the multifunctional benzophenone group have the same aryl moiety, 2 of the anthraquinone units of the multifunctional anthraquinone group have the same aryl moiety or a benzophenone unit and an anthraquinone unit of the hybrid benzophenone-anthraquinone group share an aryl moiety. More particularly, the second photoinitiator pendant group as described above.

In a first embodiment, the multifunctional photoinitiator is copolymerized with at least the (alk(en)yl) (meth)acrylate monomer and a (meth) acrylic acid to thereby form at least one of an acrylate polymer, an acrylate oligomer and combinations thereof. Preferably the polymer or oligomer (also referred to as "copolymers") includes repeat units of the (alk(en)yl) (meth)acrylate and of the multifunctional photoinitiator. In the case of the polymer embodiment of the copolymer, the polymer includes at least about 9 repeat units, and preferably the polymer includes at least about 2 repeat units derived from the multifunctional photoinitiator, more preferably at least about 3 repeat units, and at least about 2 repeat units derived from the (alk(en)yl) (meth)acrylate monomer, more preferably at least about 3 repeat units. The polymer embodiment may contain any number of repeat units as long as the total repeat units is at least about 9 repeat units and the polymer includes at least 2 repeat units derived from the multifunctional photoinitiator and at least 2 repeat units from the (alk(en)yl) (meth)acrylate monomer. In the case of the oligomer, the compound includes at least 2 repeal units up to about 8 repeat units. The oligomer may have any combination of repeat units from multifunctional photoinitiator and the (alk(en)yl) (meth)acrylate monomer as long as the total number of repeat units is not more than about 8 and the oligomer comprises at least 2 repeat units from both the multifunctional photoinitiator and the (alk(en)yl) (meth)acrylate monomer.

In a second embodiment, the multifunctional photoinitiator may be bonded to the backbone of either a (meth)acrylate polymer or a (meth)acrylate oligomer, preferably the multifunctional photoinitiator is grafted to the backbone of the (meth)acrylate polymer or the (meth)acrylate oligomer.

Preferably, the UV curable compound disclosed herein comprise, or is, a (meth)acrylate polymer comprising the multifunctional photoinitiator grafted to its backbone.

Disclosed herein is also a method of making a UV curable polymer comprising polymerizing an acrylate monomer, preferably a (alk(en)yl) (meth)acrylate monomer, an (meth)acrylic acid, and a at least one photoinitiator compound, wherein the photoinitiator compound comprises at least one selected from a multifunctional benzophenone group, a multifunctional anthraquinone group, a multifunctional hybrid benzophenone-anthraquinone group and any combination thereof, wherein 2 of the benzophenone units of the multifunctional benzophenone group have the same aryl moiety, 2 of the anthraquinone units of the multifunctional anthraquinone group have the same aryl moiety or a benzophenone unit and an anthraquinone unit of the hybrid benzophenone-anthraquinone group share an aryl moiety, wherein a repeat unit of the UV curable polymer derived from the photoinitiator compound comprises at least 2 of the repeat units, preferably at least 8 of the repeat units, more preferably no more than about 100 of repeat units (such as from 2 to 100 repeat units, preferably from 8 to 100 repeat units). The photoinitiator compound and the acrylate monomer may be as described above.

### UV curable compositions

One application of the UV curable compound is as component of a UV curable composition, preferably a composition for a PSA.

Other Components of the UV curable compositions

The UV curable PSA compositions may include additional monomers as optional components. Examples of suitable optional monomers that may be included in the PSA composition include vinyl acetate compounds, N-vinylpyrrolidone compounds, styrene compounds, in particular alpha methyl styrene compounds, vinyl caprolactam compounds, (meth)acrylamide compounds, maleic anhydride compounds and any combination thereof.

These monomers, or units derived thereof, may be included in the UV curable compound, in particular in the UV curable polymer.

In some embodiments, the UV curable compound, in particular in the UV curable polymer, is the reaction product of at least the (meth)acrylate monomers, the photoinitiator compounds, preferably (meth)acrylic acid, and one or more of the additional monomers described above.

The UV curable PSA compositions may also include a further acrylate polymer (also referred to as "(meth)acrylate polymer"), an acrylate oligomer (also referred to as "(meth)acrylate oligomer") or combinations thereof. The further acrylate polymer or oligomer is preferably a polymer or oligomer comprising units derived from at least one (meth)acrylate monomer, preferably as described above, and units derived from (meth)acrylic acid.

### Additives

The following additives may be included in the PSA composition: tackifiers, plasticizers, organic pigments, inorganic pigments, dyes, oligomer additives, adhesion promoters, antioxidants, flame retardants, fillers and any combination thereof.

The above-mentioned additives are preferably present in the UV PSA curable compositions, individually and collectively, in an amount that is not sufficient to interfere with the cure of the UV PSA composition. More particularly, the tackifiers may be present in the UV PSA curable composition in an amount of no more than about 50 wt%, preferably less than about 25 wt%, more preferably less than about 15 wt%, more preferably less than about 10 wt%, even more preferably less than about 5 wt%. The plasticizer may be present in the UV PSA curable composition in an amount of less than about 10 wt%, preferably less than about 5 wt%, more preferably less than about 3 wt%. The organic pigments may be present in the UV PSA curable composition in an amount of less than about 20 wt%, preferably less than about 15 wt%, more preferably less than about 10 wt%, preferably less than about 5 wt%, even more preferably less than about 3 wt%. The inorganic pigments may be present in the UV PSA curable composition in an amount of less than about 50 wt%, preferably less than about 40 wt%, more preferably less than about 30 wt%, more preferably less than about 20 wt%, even more preferably less than about 10 wt%.

As non-limiting examples of tackifiers which can be used in the UV curable composition, mention can be made of rosin esters, hydrogenated rosin, hydrogenated rosin esters, terpene phenolic resins, hydrogenated C9 and mixtures thereof.

As non-limiting examples of plasticizers which can be used in the UV curable composition, mention can be made of mineral oil, citrate esters, phthalates, benzoates, adipates and mixtures thereof.

As non-limiting examples of organic pigments and inorganic pigments which can be used in the UV curable composition, mention can be made of phthalocyanine, azo dyes, quinacridone pigments, titanium dioxide, zinc oxide, iron oxides and mixtures thereof.

The present disclosure also describes a method of making a laminate. The method comprises:
a. disposing the UV curable PSA composition described herein on a 1^{st} substrate,
b. applying a 2^{nd} substrate on the UV curable PSA composition, so that the UV curable PSA composition is disposed between the 1^{st} and 2^{nd} substrates;
c. exposing the UV curable PSA composition to a UV light to cure the UV curable PSA composition,
d. optionally applying compressive force to the 1^{st} and 2^{nd} substrates.

The step of exposing the UV curable PSA composition to a UV light takes place after the UV curable PSA composition is applied on the 1^{st} substrate.

The step of exposing the UV curable PSA composition to the UV light may occur before or after applying the 2^{nd} substrate on the UV curable PSA composition, preferably the step of exposing the UV curable PSA composition to the UV light is carried out before applying the 2^{nd} substrate on the UV curable PSA composition.

Preferably the step of applying compressive force occurs during the step of exposing the UV curable PSA composition to the UV light, after the step of exposing the UV curable PSA composition to the UV light, or during and after the step of exposing the UV curable PSA composition to the UV light.

Preferably, the photoinitiator group in the UV curable compound comprises a moiety that absorbs light outside of the UV C range, preferably the amount of light outside of the UV C range capable of being absorbed comprises a sufficient amount of light to cure the UV curable PSA composition, more preferably the moiety absorbs light in the UV B range.

The 1^{st} substrate and the 2^{nd} substrate may be of the same material or of different materials.

The 1^{st} substrate and the 2^{nd} substrate may independently comprise, or be made of, a material selected from the group consisting of wood, metal (such as steel), polyamide, polyester (such as PET), polypropylene, polyethylene, polyvinyl chloride, styrene, foil, polyethylene foam, paper, paperboard and combinations thereof.

The 1^{st} substrate or the 2^{nd} substrate may be a release liner, preferably the 1^{st} substrate is a release liner.

The 1^{st} substrate and/or the 2^{nd} substrate may be in the form of a film, in particular made of the above-mentioned material (such as PET for example).

The step of exposing the UV curable PSA composition to the UV light may be carried out using a mercury UV lamp, a LED (light-emitting diode), an iron-doped bulb lamp, or any other UV light emitting source.

The UV light applied to the UV curable PSA composition may be a UV C light and/or a UV B light and/or a UV A light. Preferably, the UV light comprises a UV B light. Preferably, the UV light is outside the UV C range.

The UV light applied to the UV curable PSA composition may have a wavelength of from about 250 to about 400 nm, preferably from about 280 to about 400 nm. In particular, the UV light may be from about 250 to about 280 nm, or from about 280 to about 310 nm, or from about 310 to about 340 nm, or from about 340 to about 370 nm, or from about 370 to about 400 nm.

The dose of the light applied to the UV curable PSA composition may be from about 25 to about 800 mJ/cm², such as from about 25 to about 50 mJ/cm², or from about 50 to about 100 mJ/cm², or from about 100 to about 200 mJ/cm², or from about 200 to about 300 mJ/cm², or from about 300 to about 400 mJ/cm², or from about 400 to about 500 mJ/cm², or from about 500 to about 600 mJ/cm², or from about 600 to about 700 mJ/cm², or from about 700 to about 800 mJ/cm².

The UV curable PSA composition disposed on the substrates may be a film, having preferably a thickness of from about 1 µm to about 500 µm, more preferably from about 10 µm to about 200 µm, even more preferably from about 25 µm to about 125 µm.

The present disclosure also described a laminate obtained from a method disclosed above.

The present disclosure also described a laminate comprising a cured PSA composition between a 1^{st} and a 2^{nd} substrates. The 1^{st} and 2^{nd} substrates may be as described above. The PSA composition which is cured may be as described above.

Further included herein are the following clauses of additional embodiments.

A 1^{st} clause includes a UV curable compound comprising at least one acrylate group and at least one photoinitiator group, wherein the photoinitiator group comprises at least one selected from a multifunctional benzophenone group, a multifunctional anthraquinone group, a multifunctional hybrid benzophenone-anthraquinone group and any combination thereof, wherein 2 of the benzophenone units of the multifunctional benzophenone group have the same aryl moiety, 2 of the anthraquinone units of the multifunctional anthraquinone group have the same aryl moiety or a benzophenone unit and an anthraquinone unit of the hybrid benzophenone-anthraquinone group share an aryl moiety, preferably the compound comprises one of a polymer or an oligomer.

A 2^{nd} clause includes the UV curable compound of clause 1, wherein the photoinitiator group comprises one of a pendant group of the compound or a repeat unit of the compound.

A 3^{rd} clause includes the UV curable compound of clauses 1-2, wherein the photoinitiator group comprises a repeat unit of the compound and a number of the repeat units comprises at least about 2 repeat units, preferably at least about 8, more preferably at least about 9 repeat units, further preferably no more than about 100.

A 4^{th} clause includes the UV curable compound of clauses 1-3, comprising at least a second photoinitiator pendant group, preferably the second photoinitiator pendant group comprises at least one selected from a multifunctional benzophenone group, a multifunctional anthraquinone group, a multifunctional hybrid benzophenone-anthraquinone group and any combination thereof, wherein 2 of the benzophenone units of the multifunctional benzophenone group have the same aryl moiety, 2 of the anthraquinone units of the multifunctional anthraquinone group have the same aryl moiety or a benzophenone unit and an anthraquinone unit of the hybrid benzophenone-anthraquinone group share an aryl moiety.

A 5^{th} clause includes the UV curable compound of clauses 1-4, wherein the photoinitiator group comprises at least about 0.05 wt% up to about 10 wt% of the UV curable compound or a wt% of the photoinitiator group in the UV curable compound comprises one selected from the group consisting of about 0.05 wt % to about 0.1 wt%, about 0.1 wt % to about 0.3 wt%, about 0.3 wt % to about 0.5 wt%, about 0.5 wt % to about 1.0 wt %, about 1 wt % to about 2 wt %, about 2 wt % to about 3 wt %, about 3 wt % to about 4 wt %, about 4 wt % to about 5 wt %, about 5 wt % to about 6 wt %, about 6 wt % to about 7 wt %, about 7 wt % to about 8 wt %, about 8 wt % to about 9 wt %, about 9 wt % to about 10 wt % and combinations thereof.

A 6^{th} clause includes the UV curable compound of clauses 1 to 5, wherein the photoinitiator group further comprises a terminal acrylate group.

A 7^{th} clause includes the UV curable compound of clauses 1- 6, wherein the photoinitiator group further comprises a R' group, wherein R' comprises at least one selected from alkyl, vinyl, furyl, thiol, thioether, aryl thioether, alkyl thiolether, morpholino, chlorine, bromine, sulfur, nitrogen, nitrogen- alkyl, ester, ether, alkoxy, phenoxy, amine, amide, urethane, phenyl, (meth)acrylate, (meth)acrylamide, epoxide, oxetane, vinyl, ketone, O-C(=O)-, and any combination thereof.

A 8^{th} clause includes the UV curable compound of clause 7, wherein the photoinitiator group further comprises a R" group, wherein R" comprises at least one selected from alkyl, vinyl, furyl, thiol, thioether, aryl thioether, alkyl thiolether, morpholino, chlorine, bromine, sulfur, nitrogen, nitrogen- alkyl, ester, ether, alkoxy, phenoxy, amine, amide, urethane, phenyl, (meth)acrylate, (meth)acrylamide, epoxide, oxetane, vinyl, ketone, O-C(=O)-, and any combination thereof, preferably the R' may be same or different than the R".

A 9^{th} clause includes the UV curable compound of clauses 1-6, wherein the photoinitiator group has the structure of at least one of (a.) - (q), or a structure derived thereof:
a. 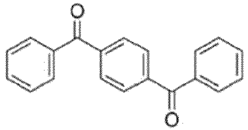
b. 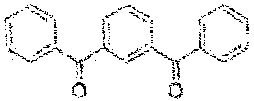
c. 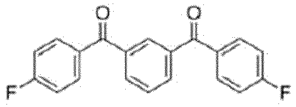
d. 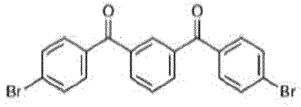
e. 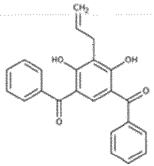
f. 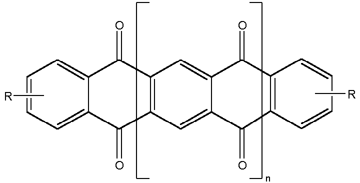
g. 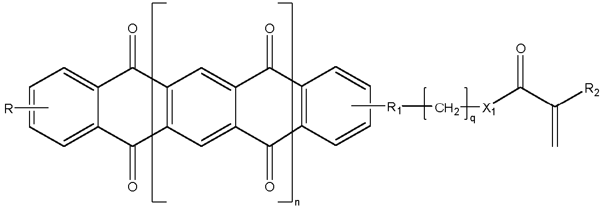
h. 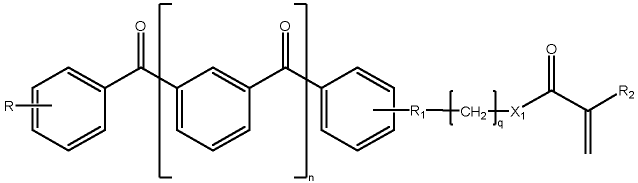
i. 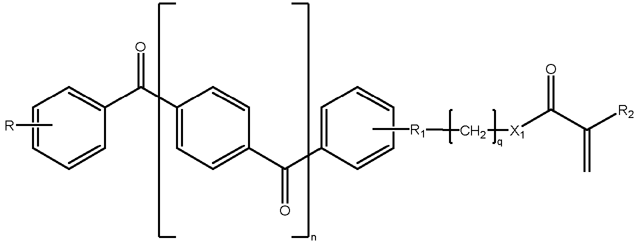
j. 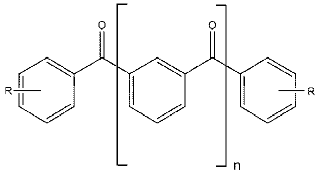
k. 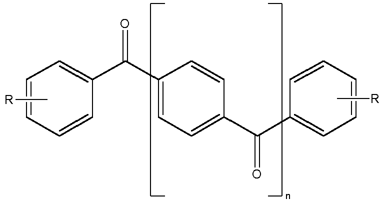
l. 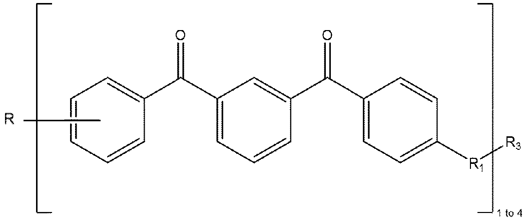
m. 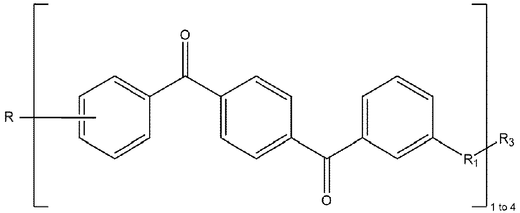
n. 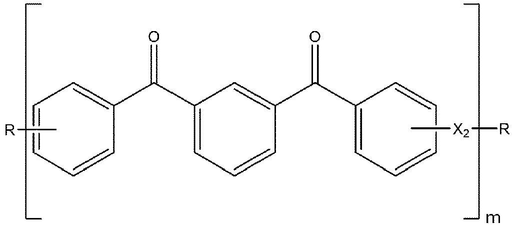
o. 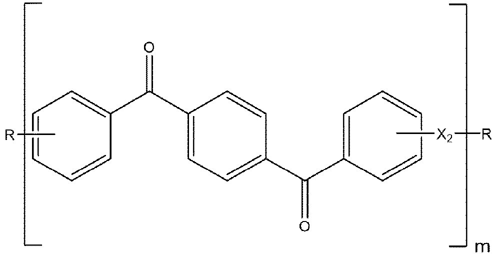
p. 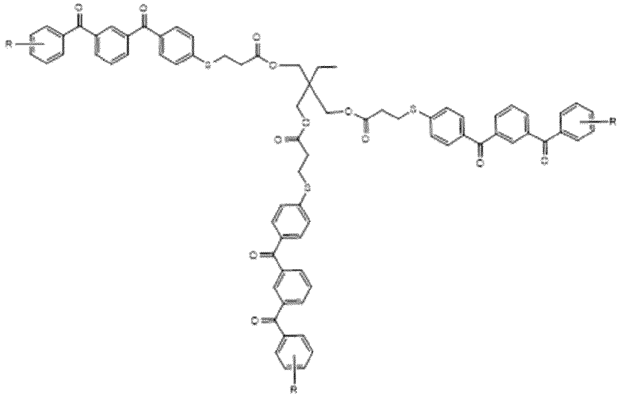 and
q. any combination thereof

wherein n comprises higher than 0, preferably at least 1, more preferably about 1 to 20;
m comprises at least 2, preferably about 2 to 20;
q comprises 0 or higher, preferably about 1 to 20;
R comprises at least one selected from the group of hydrogen, alkyl, preferably about a C4-C20 carbon chain, more preferably about a C6-C20 carbon chain, vinyl, furyl, thiol, thioether, aryl thioether, alkyl thiolether, morpholino, chlorine, bromine, sulfur, nitrogen, nitrogen- alkyl, ester, ether, alkoxy, phenoxy, amine, amide, urethane, phenyl, (meth)acrylate, (meth)acrylamide, epoxide, oxetane, vinyl, ketone, O-C(=O)-, and any combination thereof;
R₁ is selected from thioether, ester, urethane and amide;
R₂ is a methyl group (CH₃) or hydrogen (H);
R₃: comprises at least one selected from the group of a multifunctional thiol, a multifunctional alcohol, a multifunctional amine, a multifunctional acid and any combination thereof;
X₁ is oxygen or nitrogen with attached proton, preferably the proton comprises hydrogen;
X₂ a unit derived from the condensation reaction of at least one selected from the group of dialcohol, diacid, dithiol, diamine, and any combinations thereof, to form an oligomer or a polymer.
A 10^{th} clause includes the UV curable compound of clauses 1-9, wherein the photoinitiator group comprises at least one of 1,3 difunctional benzophenone, 1,4 difunctional benzophenone, fluorinated 1,3 difunctional benzophenone, hydroxyl 1,3 difunctional benzophenone, brominated 1,3 difunctional benzophenone and combinations thereof.

A 11^{th} clause includes the UV curable compound of clauses 1-10, which is a UV curable polymer comprising the reaction product of an acrylate monomer, preferably a (alk(en)yl) (meth)acrylate monomer, an acrylic acid and a at least one photoinitiator compound, wherein the photoinitiator compound comprises at least one selected from a multifunctional benzophenone group, a multifunctional anthraquinone group, a multifunctional hybrid benzophenone-anthraquinone group and any combination thereof, wherein 2 of the benzophenone units of the multifunctional benzophenone group have the same aryl moiety, 2 of the anthraquinone units of the multifunctional anthraquinone group have the same aryl moiety or a benzophenone unit and an anthraquinone unit of the hybrid benzophenone-anthraquinone group share an aryl moiety, wherein a repeat unit of the UV curable polymer derived from the photoinitiator compound comprises at least 2 of the repeat units, preferably at least 8 of the repeat units, more preferably no more than about 100 of repeat units.

A 12^{th} clause includes a UV curable polymer comprising the reaction product of an acrylate monomer, preferably a (alk(en)yl) (meth)acrylate monomer, an acrylic acid and a at least one photoinitiator compound, wherein the photoinitiator compound comprises at least one selected from a multifunctional benzophenone group, a multifunctional anthraquinone group, a multifunctional hybrid benzophenone-anthraquinone group and any combination thereof, wherein 2 of the benzophenone units of the multifunctional benzophenone group have the same aryl moiety, 2 of the anthraquinone units of the multifunctional anthraquinone group have the same aryl moiety or a benzophenone unit and an anthraquinone unit of the hybrid benzophenone-anthraquinone group share an aryl moiety, wherein a repeat unit of the UV curable polymer derived from the photoinitiator compound comprises at least 2 of the repeat units, preferably at least 8 of the repeat units, more preferably no more than about 100 of repeat units.

A 13^{th} clause includes a UV curable PSA composition comprising an acrylate monomer, preferably a (alk(en)yl) (meth)acrylate monomer, an acrylic acid and the UV curable compound of clauses 1-11 or the UV curable polymer of clause 12.

A 14^{th} clause includes the UV curable PSA composition of clause 13, further comprising at least one additional component selected from the group of a vinyl acetate compound, a N-vinylpyrrolidone compound, a styrene compound, preferably an alpha methyl styrene compound, a vinyl caprolactam compound, a (meth)acrylamide compound, a maleic anhydride compound, a tackifier, a plasticizer, an organic pigment, an inorganic pigment, dye, oligomer additives, adhesion promoter, antioxidant, flame retardant, filler, and any combination thereof.

A 15^{th} clause includes the UV curable PSA composition of clauses 13-14, further comprising at least one of an acrylate polymer, an acrylate oligomer and combinations thereof.

A 16^{th} clause includes a method of making a laminate comprising:
a. disposing the UV curable PSA composition of clauses 13-15 on a 1^{st} substrate,
b. applying a 2^{nd} substrate on the UV curable PSA composition, so that the UV curable PSA composition is disposed between the 1^{st} and 2^{nd} substrates;
c. exposing the UV curable PSA composition to a UV light to cure the UV curable PSA composition, wherein the exposing occurs before or after applying the 2^{nd} substrate on the UV curable PSA composition, and
d. optionally applying compressive force to the 1^{st} and 2^{nd} substrates, preferably the applying compressive force occurs at least one of during the exposing, after the exposing and a combination thereof.

A 17^{th} clause includes the method of clause 16, wherein the photoinitiator group (or compound) comprises a moiety that absorbs light outside of the UV C range, preferably the amount of light outside of the UV C range capable of being absorbed comprises a sufficient amount of light to cure the UV curable PSA composition, more preferably the moiety absorbs light in the UV B range.

A 18^{th} clause includes a method of making a UV curable polymer comprising polymerizing an acrylate monomer, preferably a (alk(en)yl) (meth)acrylate monomer, an (meth)acrylic acid, and a at least one photoinitiator compound, wherein the photoinitiator compound comprises at least one selected from a multifunctional benzophenone group, a multifunctional anthraquinone group, a multifunctional hybrid benzophenone-anthraquinone group and any combination thereof, wherein 2 of the benzophenone units of the multifunctional benzophenone group have the same aryl moiety, 2 of the anthraquinone units of the multifunctional anthraquinone group have the same aryl moiety or a benzophenone unit and an anthraquinone unit of the hybrid benzophenone-anthraquinone group share an aryl moiety, wherein a repeat unit of the UV curable polymer derived from the photoinitiator compound comprises at least 2 of the repeat units, preferably at least 8 of the repeat units, more preferably no more than about 100 of repeat units.

### EXAMPLES

### Synthesis Example 1 (polymer 1)

A mixture of monomers and chain transfer agent having the components set forth below was prepared:
1079 g of butyl acrylate
45 g of acrylic acid
10 g of acrylated multifunctional photoinitiator
53 g of isopropyl alcohol

Initially, 66% of mixture of monomers and chain transfer agent (isopropyl alcohol) was placed in an addition tank with a feed pump. The remaining monomer and 486 g of ethyl acetate was added into a 2-liter water jacketed reactor. A slow purge of nitrogen was passed through the reactor. The jacket temperature was set to 85°C, and the monomer mixture and ethyl acetate were heated until a good reflux was obtained. The reactor contents were stirred at 200 rpm during the course of the reaction. Separately, a solution of 1.75 g Vazo^{™} 64 (free radical initiator) and 45 g of ethyl acetate was prepared. The Vazo^{™} 64 solution was split with 75% of the solution added to the addition tank with pump. After 20 minutes of solvent reflux, the remaining 25% of the Vazo^{™} 64 solution was added to the reactor. The reaction exothermed and was allowed to continue reacting for 30 mins. After 30 mins, the remaining monomer and Vazo^{™} 64 solution were added to the reactor over a period of 120 minutes. At the end of the feeds, an additional 20 g of ethyl acetate was used to wash the feed/pump system. The reaction mixture was heated at 85°C for an additional 5.5 hours after the feed was complete. After this time period, the reaction mixture was cooled to below 50°C, and then bottled. Final polymer solids were theoretically 65.3 wt%.

### Synthesis Example 2 (polymer 2)

A mixture of monomers and chain transfer agent having the components set forth below was prepared:
1079 g of butyl acrylate
10 g of glycidyl methacrylate
53 g of isopropyl alcohol

Initially, 66% of mixture of monomers and chain transfer agent (isopropyl alcohol) was placed in an addition tank with a feed pump. The remaining monomer and 486 g of ethyl acetate was added into a 2-liter water jacketed reactor. A slow purge of nitrogen was passed through the reactor. The jacket temperature was set to 85°C, and the monomer mixture and ethyl acetate were heated until a good reflux was obtained. The reactor contents were stirred at 200 rpm during the course of the reaction. Separately, a solution of 1.75 g Vazo^{™} 64 (free radical initiator) and 45 g of ethyl acetate was prepared. The Vazo^{™} 64 solution was split with 75% of the solution added to the addition tank with pump. After 20 minutes of solvent reflux, the remaining 25% of the Vazo^{™} 64 solution was added to the reactor. The reaction exothermed and was allowed to continue reacting for 30 mins. After 30 mins, the remaining monomer and Vazo^{™} 64 solution were added to the reactor over a period of 120 minutes. At the end of the feeds, an additional 20 g of ethyl acetate was used to wash the feed/pump system. The reaction mixture was heated at 85°C for an additional 5.5 hours after the feed was complete. After this time period, the reaction mixture was cooled to below 50°C, and then bottled. Final polymer solids were theoretically 64.4 wt%. Polymer 2 can then be used to graft multifunctional photoinitiator to it by reacting with the epoxide functionality at a later time.

### Synthesis example 3 - multifunctional photoinitiator for grafting to polymer (Graft 1)

A functional multifunctional photoinitiator (PI) for grafting to polymer 2 as disclosed in synthesis example 2 can be prepared through the reaction mechanism shown below, as described in the article European Polymer Journal, vol.46, No.6 (2010) p.1278-1287.

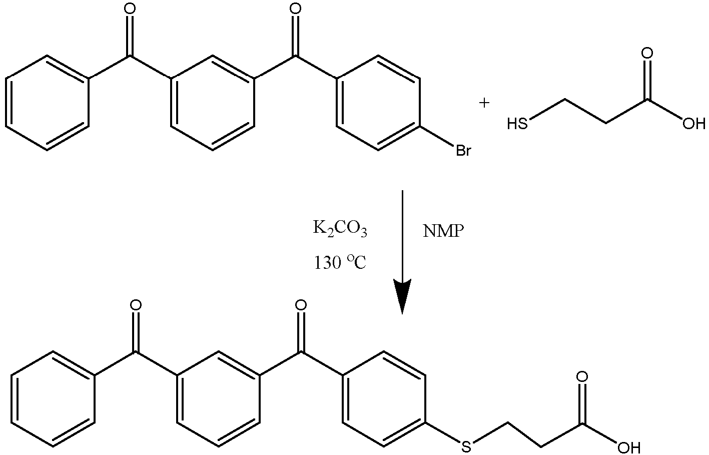

Purification of the acid functionalized photoinitiator molecule proceeds to provide a molecule that can be grafted to polymer 2 by reaction with the epoxide group in the polymer, to result in the structure shown below.

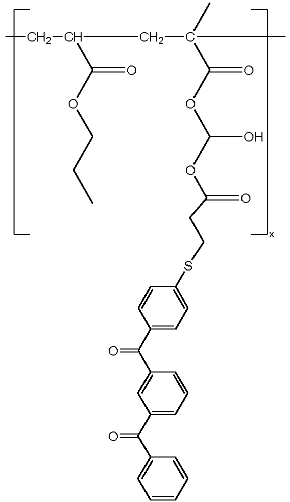

## Claims

1. A UV curable compound comprising at least one acrylate group and at least one photoinitiator group, wherein the photoinitiator group comprises at least one selected from a multifunctional benzophenone group, a multifunctional anthraquinone group, a multifunctional hybrid benzophenone-anthraquinone group and any combination thereof, wherein 2 of the benzophenone units of the multifunctional benzophenone group have the same aryl moiety, 2 of the anthraquinone units of the multifunctional anthraquinone group have the same aryl moiety or a benzophenone unit and an anthraquinone unit of the hybrid benzophenone-anthraquinone group share an aryl moiety, preferably the compound comprises one of a polymer or an oligomer.

2. The UV curable compound of claim 1, wherein the photoinitiator group comprises one of a pendant group of the compound or a repeat unit of the compound.

3. The UV curable compound of claim 2, wherein the photoinitiator group comprises a repeat unit of the compound and a number of the repeat units comprises at least about 2 repeat units, preferably at least about 8, more preferably at least about 9 repeat units, further preferably no more than about 100.

4. The UV curable compound of claim 2, comprising at least a second photoinitiator pendant group, preferably the second photoinitiator pendant group comprises at least one selected from a multifunctional benzophenone group, a multifunctional anthraquinone group, a multifunctional hybrid benzophenone-anthraquinone group and any combination thereof, wherein 2 of the benzophenone units of the multifunctional benzophenone group have the same aryl moiety, 2 of the anthraquinone units of the multifunctional anthraquinone group have the same aryl moiety or a benzophenone unit and an anthraquinone unit of the hybrid benzophenone-anthraquinone group share an aryl moiety.

5. The UV curable compound of any one of claims 1 to 4, wherein the photoinitiator group comprises at least about 0.05 wt% up to about 10 wt% of the UV curable compound or a wt% of the photoinitiator group in the UV curable compound comprises one selected from the group consisting of about 0.05 wt % to about 0.1 wt%, about 0.1 wt % to about 0.3 wt%, about 0.3 wt % to about 0.5 wt%, about 0.5 wt % to about 1.0 wt %, about 1 wt % to about 2 wt %, about 2 wt % to about 3 wt %, about 3 wt % to about 4 wt %, about 4 wt % to about 5 wt %, about 5 wt % to about 6 wt %, about 6 wt % to about 7 wt %, about 7 wt % to about 8 wt %, about 8 wt % to about 9 wt %, about 9 wt % to about 10 wt % and combinations thereof.

6. The UV curable compound of any one of claims 1 to 5, wherein the photoinitiator group further comprises a R' group, wherein R' comprises at least one selected from alkyl, vinyl, furyl, thiol, thioether, aryl thioether, alkyl thiolether, morpholino, chlorine, bromine, sulfur, nitrogen, nitrogen- alkyl, ester, ether, alkoxy, phenoxy, amine, amide, urethane, phenyl, (meth)acrylate, (meth)acrylamide, epoxide, oxetane, vinyl, ketone, O-C(=O)-, and any combination thereof.

7. The UV curable compound of claim 6, wherein the photoinitiator group further comprises a R" group, wherein R" comprises at least one selected from alkyl, vinyl, furyl, thiol, thioether, aryl thioether, alkyl thiolether, morpholino, chlorine, bromine, sulfur, nitrogen, nitrogen- alkyl, ester, ether, alkoxy, phenoxy, amine, amide, urethane, phenyl, (meth)acrylate, (meth)acrylamide, epoxide, oxetane, vinyl, ketone, O-C(=O)-, and any combination thereof, preferably the R' may be same or different than the R".

8. The UV curable compound of any one of claims 1 to 5, wherein the photoinitiator group has the structure of at least one of (a.) - (q), or a structure derived thereof:
a. 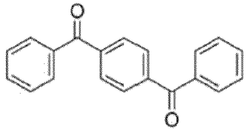
b. 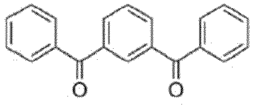
c. 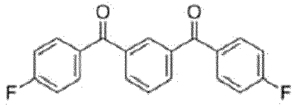
d. 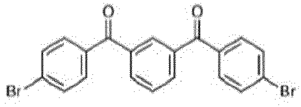
e. 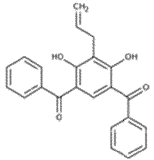
f. 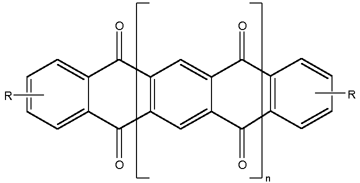
g. 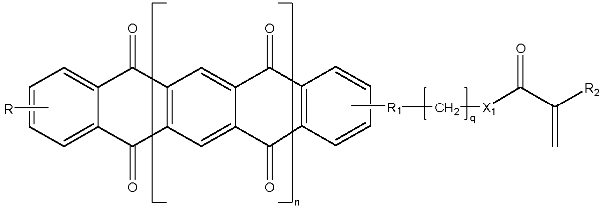
h. 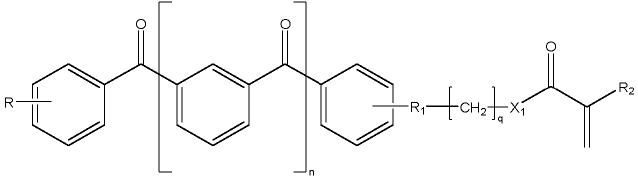
i. 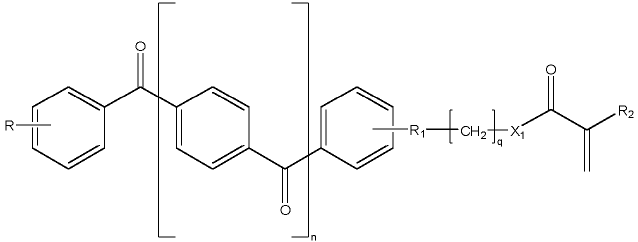
j. 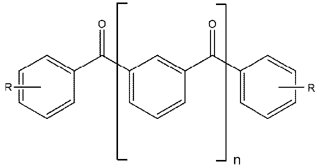
k. 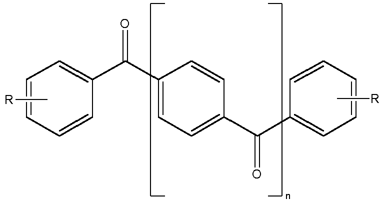
l. 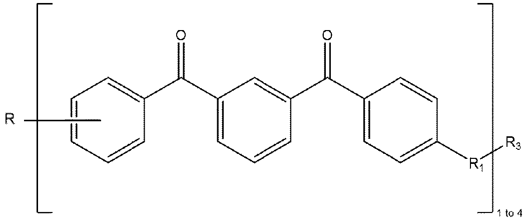
m. 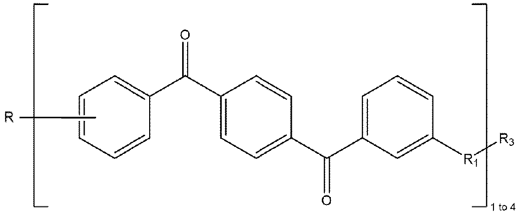
n. 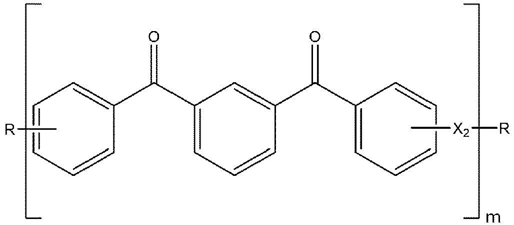
o. 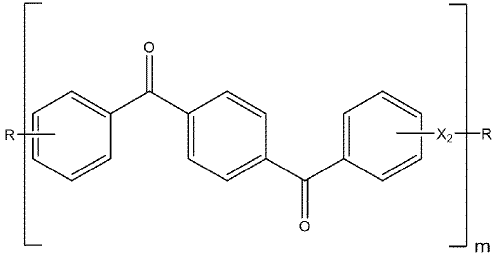
p. 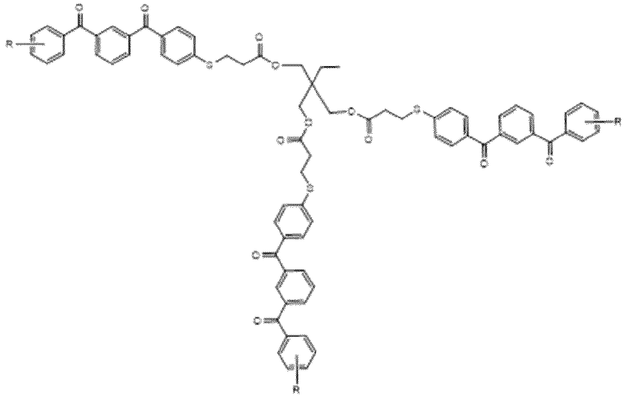 and
q. any combination thereof
wherein n comprises higher than 0, preferably at least 1, more preferably about 1 to 20;
m comprises at least 2, preferably about 2 to 20;
q comprises 0 or higher, preferably about 1 to 20;
R comprises at least one selected from the group of hydrogen, alkyl, preferably about a C4-C20 carbon chain, more preferably about a C6-C20 carbon chain, vinyl, furyl, thiol, thioether, aryl thioether, alkyl thiolether, morpholino, chlorine, bromine, sulfur, nitrogen, nitrogen- alkyl, ester, ether, alkoxy, phenoxy, amine, amide, urethane, phenyl, (meth)acrylate, (meth)acrylamide, epoxide, oxetane, vinyl, ketone, O-C(=O)-, and any combination thereof;
R₁ is selected from thioether, ester, urethane and amide;
R₂ is a methyl group (CH₃) or hydrogen (H);
R₃: comprises at least one selected from the group of a multifunctional thiol, a multifunctional alcohol, a multifunctional amine, a multifunctional acid and any combination thereof;
X₁ is oxygen or nitrogen with attached proton, preferably the proton comprises hydrogen;
X₂ a unit derived from the condensation reaction of at least one selected from the group of dialcohol, diacid, dithiol, diamine, and any combinations thereof, to form an oligomer or a polymer.

9. The UV curable compound of claim 1 to 8, wherein the photoinitiator group comprises at least one of 1,3 difunctional benzophenone, 1,4 difunctional benzophenone, fluorinated 1,3 difunctional benzophenone, hydroxyl 1,3 difunctional benzophenone, brominated 1,3 difunctional benzophenone and combinations thereof.

10. The UV curable compound of claim 1 to 9, which is a UV curable polymer comprising the reaction product of an acrylate monomer, preferably a (alk(en)yl) (meth)acrylate monomer, an acrylic acid and a at least one photoinitiator compound, wherein the photoinitiator compound comprises at least one selected from a multifunctional benzophenone group, a multifunctional anthraquinone group, a multifunctional hybrid benzophenone-anthraquinone group and any combination thereof, wherein 2 of the benzophenone units of the multifunctional benzophenone group have the same aryl moiety, 2 of the anthraquinone units of the multifunctional anthraquinone group have the same aryl moiety or a benzophenone unit and an anthraquinone unit of the hybrid benzophenone-anthraquinone group share an aryl moiety, wherein a repeat unit of the UV curable polymer derived from the photoinitiator compound comprises at least 2 of the repeat units, preferably at least 8 of the repeat units, more preferably no more than about 100 of repeat units.

11. A UV curable PSA composition comprising an acrylate monomer, preferably a (alk(en)yl) (meth)acrylate monomer, an acrylic acid and the UV curable compound of any one of claims 1 to 10.

12. The UV curable PSA composition of claim 11, further comprising at least one additional component selected from the group of a vinyl acetate compound, a N-vinylpyrrolidone compound, a styrene compound, preferably an alpha methyl styrene compound, a vinyl caprolactam compound, a (meth)acrylamide compound, a maleic anhydride compound, a tackifier, a plasticizer, an organic pigment, an inorganic pigment, dye, oligomer additives, adhesion promoter, antioxidant, flame retardant, filler, and any combination thereof.

13. The UV curable PSA composition of claim 11 or claim 12 further comprising at least one of an acrylate polymer, an acrylate oligomer and combinations thereof.

14. A method of making a laminate comprising:
a. disposing the UV curable PSA composition of any one of claims 12 to 14 on a 1^{st} substrate,
b. applying a 2^{nd} substrate on the UV curable PSA composition, so that the UV curable PSA composition is disposed between the 1^{st} and 2^{nd} substrates;
c. exposing the UV curable PSA composition to a UV light to cure the UV curable PSA composition, wherein the exposing occurs before or after applying the 2^{nd} substrate on the UV curable PSA composition, and
d. optionally applying compressive force to the 1^{st} and 2^{nd} substrates, preferably the applying compressive force occurs at least one of during the exposing, after the exposing and a combination thereof.

15. The method of claim 14 wherein the photoinitiator group comprises a moiety that absorbs light outside of the UV C range, preferably the amount of light outside of the UV C range capable of being absorbed comprises a sufficient amount of light to cure the UV curable PSA composition, more preferably the moiety absorbs light in the UV B range.
